Europäisches Patentamt

European Patent Office

Office européen des brevets

(19)

(11) Numéro de publication: **0 107 595**
**B1**

(12) **FASCICULE DE BREVET EUROPEEN**

(45) Date de publication du fascicule du brevet: 07.12.88

(51) Int. Cl.⁴: **G 01 S 7/06**, G 01 S 7/44

(21) Numéro de dépôt: 83402074.5

(22) Date de dépôt: **25.10.83**

(54) **Procédé et dispositif de remanence artificielle et leur application à un transformateur numérique d'images.**

(30) Priorité: **27.10.82 FR 8217984**

(43) Date de publication de la demande:
**02.05.84 Bulletin 84/18**

(45) Mention de la délivrance du brevet:
**07.12.88 Bulletin 88/49**

(84) Etats contractants désignés:
**DE GB IT NL SE**

(56) Documents cités:
**EP-A-0 032 836**
**EP-A-0 038 102**
**EP-A-0 063 865**
**FR-A-2 356 240**
**GB-A-2 015 847**
**US-A-4 330 781**

(73) Titulaire: **THOMSON-CSF**
**173, Boulevard Haussmann**
**F-75379 Paris Cédex 08 (FR)**

(72) Inventeur: **Andrieu, Jean-Pierre**
**THOMSON-CSF SCPI 173, bld Haussmann**
**F-75379 Paris Cedex 08 (FR)**
Inventeur: **Holler, Georg**
**THOMSON-CSF SCPI 173, bld Haussmann**
**F-75379 Paris Cedex 08 (FR)**
Inventeur: **Lachaize, Christian**
**THOMSON-CSF SCPI 173, bld Haussmann**
**F-75379 Paris Cedex 08 (FR)**

(74) Mandataire: **Benoit, Monique et al**
**THOMSON-CSF SCPI 19, avenue de Messine**
**F-75008 Paris (FR)**

## Description

La présente invention concerne un procédé et un dispositif de traitement de la rémanence artificielle dans un transformateur numérique d'images.

Un transformateur numérique d'images est utilisé notamment pour l'exploitation d'informations radar, par exemple pour l'affichage du trafic, aérien, ou maritime, d'une zone sous surveillance ou encore des informations en provenance d'un sonar, de senseurs infra rouge, de systèmes d'échographie, que l'on veut visualiser sur des écrans fonctionnant en mode télévision.

Dans un tel cadre, l'exploitation des informations radar peut être faite de présentation des échos reçus sur un oscilloscope. Le balayage de l'oscilloscope est déclenché à chaque émission radar, du centre de l'oscilloscope dans une direction liée à la direction de l'antenne, et les échos reçus apparaissent sous forme de points ou traces lumineuses. On obtient ainsi une carte des échos reçus situés par rapport au radar placé au centre de la carte. Du fait de la rémanence de l'affichage sur oscilloscope des échos successifs reçus au cours des diverses rotations de l'antenne, les mobiles se reconnaissent par les traînées lumineuses d'intensité globalement décroissante, appelées comètes, indiquant ainsi la direction du mobile (du point le plus pâle au point le plus brillant).

Du fait de la faible luminance des affichages effectués sur oscilloscope, on a substitué aux oscilloscopes des tubes cathodiques de récepteurs de télévision à grande brillance.

Du fait que le renouvellement de l'image radar est relativement lent par rapport à la fréquence de renouvellement d'une image de télévision, il est nécessaire de prévoir une mémoire d'image. Il a tout d'abord été fait appel à des tubes cathodiques à mémoire, à deux canons, assurant une mémorisation analogique et rémanente. Les inconvénients de ce type de tube (problèmes de réglage, maintenance et vieillissement notamment) ont conduit à utiliser une mémorisation numérique, rendant nécessaire la numérisation préalable de l'image radar.

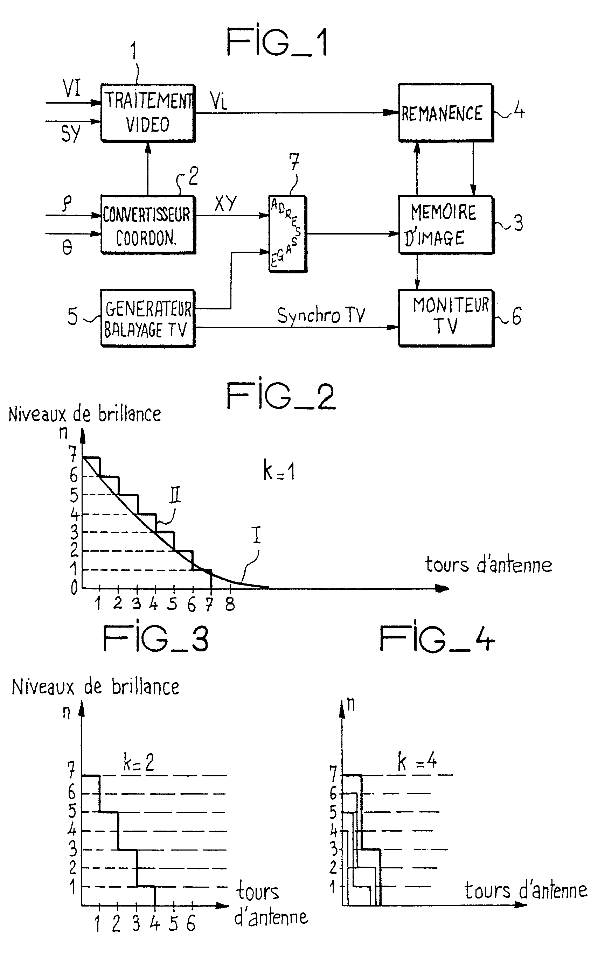

La figure 1 donne une représentation schématique d'un transformateur numérique d'image (TDI en abrégé) auquel la présente invention s'applique.

Un tel transformateur comprend essentiellement: un circuit 1 faisant l'interface radar, dans lequel se traite la vidéo incidente, ce circuit recevant des signaux vidéo radar VI conjointement avec les signaux de synchronisation radar SY; un circuit 2 de conversion des coordonnés polaires ρ, θ de la vidéo radar en coordonnées cartésienne XY; une mémoire numérique d'images 3 à accès aléatoire (RAM); un circuit d'adressage 7; un circuit 4 dit de rémanence, objet de l'invention, est interposé entre l'interface 1 et la mémoire 3; un circuit 5 de génération de balayage TV est connecté, à travers le circuit d'adressage 7, à la mémoire 3 et à un moniteur de télévision 6, lui même connecté à la mémoire 3.

Le fonctionnement d'un TDI décrit ci-dessus est le suivant:

— le circuit de traitement de la vidéo 1 échantillonne et met sous forme numérique les signaux vidéo radar VI qu'il reçoit; il peut comprendre un circuit de compression vidéo permettant l'acquisition en temps réel d'une radiale radar, c'est-à-dire l'acquisistion des signaux vidéo reçus par le radar après émission par celui-ci d'une impulsion pour un angle défini de l'antenne en rotation correspondant à une impulsion de synchronisation SY, et la lecture de ces signaux vidéo, en temps différé et à une vitesse différente, ceci pour s'adapter aux temps d'accès de la mémoire d'image 3;

— Le circuit 2 de conversion de coordonnés permet de calculer l'adresse de chaque élément d'image en coordonnées cartésiennes à partir des informations radar reçues en coordonnées polaires;

— la mémoire d'images 3 a une capacité adaptée au standard de télévision utilisé; elle peut être par exemple de 1.024 lignes de 1.024 case mémoire; à chaque case correspond un point de l'image à visuliser; la luminance de chaque point peut être codée par exemple à l'aide de 3 bits autorisant huit niveaux de luminosité pour chaque point; pour cette mémoire, les phases de lecture et d'écriture sont asynchrones: la lecture est prioritaire et, pendant une phase lecture, la conversion est arrêtée;

— le circuit 5 effectue les opérations suivantes;

— génération des signaux de synchronisation télévision;

— lecture simultanée de plusieurs points dans la mémoire image 3, de manière à respecter les temps d'accès des circuits utilisés et de permettre l'écriture dans cette même mémoire;

— conversion numérique-analogique des informations de luminosité lues dans la mémoire image pour engendrer un signal vidéo télévision (analogique) destiné au moniteur 6 sur lequel apparaissent les informations visualisées.

Le circuit de rémanence 4 a pour rôle de restituer, pour des informations données en numérique, pour lesquelles la rémanence n'existe pas, un effet de rémanence comparable à celui qui est produit sur un tube mémoire analogique. En effet, les informations inscrites ne s'atténuent pas d'elles-mêmes en fonction du temps dans une mémoire numérique qui, sans ce processus particulier de rémanence dite artificielle, tend à se remplir indéfiniment, l'image de télévision tendant à la saturation. Au contraire, sur un tube, la brillance d'un plot commence à baisser dès qu'il a été inscrit. Pour une mémoire numérique, le circuit de rémanence 4 crée un effet semblable, avec toutefois un retard d'un tour d'antenne et une décroissance de niveau quantifiée à chaque tour.

Suivant l'art antérieur, la rémanence artificielle appliquée à un TDI suit une loi de décroissance fixe, c'est-à-dire que la loi de composition entre la vidéo incidente et la vidéo déjà enregistrée en mémoire, suit une loi figée dans le temps. Si l'on appelle Vi la vidéo incidente, par exemple, sortant de l'interface 1, Vm la vidéo existant en mémoire 3 et Vr la vidéo résultante, c'est-à-dire celle qui sera réinscrite dans la mémoire 3, la loi qui suit la rémanence artificielle est la suivante:

— si $Vi \geqslant Vm$, $Vr=Vi$ c'est-à-dire que si la vidéo incidente a une amplitude supérieure ou égale à la vidéo en mémoire, pour la cellule mémoire considérée, c'est la valeur de l'amplitude incidente (Vi) qui est réinscrite en mémoire comme valeur de la vidéo résultante.

— Si $Vi<Vm$, $Vr=Vm-k$ c'est-à-dire que si l'amplitude de la vidéo incidente est inférieure à celle de la vidéo en mémoire, on choisit comme amplitude du signal vidéo à réinscrire en mémoire la valeur du signal déjà en mémoire diminuée d'une valeur $k$ constante, déterminée, que l'on appelera facteur de décrémentation.

Cette opération ne doit avoir lieu qu'une fois par tour d'antenne. Pour contrôleur que c'est bien le cas, chaque cellule élémentaire de la mémoire comporte un bit dit de rémanence qui, à chaque opération d'inscription, est comparé à un bit de "tour" qui change de valeur à chaque tour d'antenne. Dans le cas où le signal vidéo incident Vi a une amplitude inférieure à l'amplitude du signal Vm déjà mis en mémoire, on compare le bit de rémanence au bit de tour:

— s'il y a inégalité entre ces deux bits signifiant que l'opération de décrémentation de la vidéo n'a pas été effectuée encore au tour d'antenne considéré pour la cellule mémoire analysée. La nouvelle valeur du signal vidéo mise en mémoire est $Vr=Vm-k$. Le bit de rémanence est alors basculé, permettant d'éviter ultérieurement au même tour d'antenne, une nouvelle décrémentation pour cette cellule.

— s'il y égalité du bit de rémanence et du bit de tour, cela signifie que l'opération $Vm-k$ a déjà été faite au cours du tour d'antenne considéré pour la cellule concernée et elle ne sera pas répétée.

Le processus de décrémentation étant fait en simultanéité avec les inscriptions, c'est-à-dire en synchronisme avec la rotation de l'antenne pour un radar (dans un cadre plus général ce serait en synchronisme avec l'arrivée de l'information de position d'un capteur), l'effet obtenu sur l'image est très proche de celui obtenu avec les transformateurs d'images analogiques. Sur ces derniers, le signal décroit dès qu'il est inscrit, alors que dans les transformateurs numériques d'images la décroissance débute au tour d'antenne suivant avec un quantum de décrémentation à chaque tour.

La figure 2 représente l'évolution des niveaux be brillance d'un même point, supposé initialement à un niveau de brillance maximum égal à 7, en fonction du nombre de tours d'antenne, rendant ainsi compte de l'évolution de la rémanence dans les deux cas d'un transformateur d'images analogique (courbe 1) et numérique (courbe 11). Dans le second cas on notera que la vidéo est quantifiée, avec $k=1$.

On notera également que le terme k permet de fixer la loi de décroissance de la vidéo en mémoire. Pour une vidéo exprimée sur $n$ bits on obtient la disparition du signal vidéo après $2^n-1$ tours d'antenne, si $k=1$.

La figure 3, analogique à la figure 2, montre que pour $k=2$ et un signal vidéo exprimé sur 8 niveaux la décroissance est obtenue sur 4 tours.

Suivant l'art antérieur, on peut ainsi faire varier le terme $k$ de 1 à $2^n$ pour une vidéo exprimée sur $n$ bits; toutefois, pour un équipement donné, le terme k une fois choisi reste constant.

On peut remarquer que pour certaines valeurs de k, le temps nécessaire à la disparition de l'information ne suit pas une loi régulière en fonction du niveau initial de la vidéo incidente.

La figure 4, analogue à la figure 2, présente un exemple de décroissance de signaux vidéo exprimés sur 3 bits avec $k=4$. On constate qu'une information vidéo entrée avec les niveaux 7, 6 et 5 reste en mémoire pendant deux tours d'antenne, alors que les informations entrées avec les niveaux 4, 3, 2 ou 1 n'y restent que pendant un tour.

Ainsi, d'après ce qui précède on voit que l'on peut obtenir des lois de décroissance des informations vidéo qui se rapprochent de la décroissance naturelle observée dans les transformateurs d'images analogiques. Cependant, la loi de décroissance qui a été choisie pour un transformateur reste fixe au cours du temps; elle peut être toutefois choisie plus ou moins rapide et dans ce cas, on a constaté que pour certaines valeurs de k relativement grandes, la décroissance de la brillance des informations n'était pas régulière, les informations de niveau élevé restant en mémoire plus longtemps que les informations de faible niveau. De plus, toutes les informations quel que soit leur niveau à l'entrée sont traitées de la même façon.

Il y a cependant des cas où il serait intéressant de modifier de façon plus sélective la loi de décroissance de la rémanence dans un transformateur numérique d'images dans le but d'une meilleure exploitation des informations affichées sur l'écran du moniteur de télévision. Ainsi, dans le cas où les informations radar sont relatives à des mobiles se déplaçant à vitesse relativement faible, comme des bateaux par exemple, il est difficile, lorsqu'on utilise un TDI pour lequel la décroissance de la rémanence est du type de l'art antérieur, de séparer le dernier écho reçu des précédents, c'est le phénomène dit de fusion: en effet, d'un tour d'antenne à l'autre, le mobile s'étant peu déplacé, les échos auxquels il donne naissance sont visualisés sensiblement au même endroit sur l'écran du moniteur TV, y formant une tâche dont il devient difficile, voire impossible, pour l'observateur d'extraire le dernier écho reçu: les informations de trajectoire et de sens de déplacement, habituellement données par la "comète" formée par les différents échos, sont alors perdues. D'autre part, les dispositifs de l'art antérieur sont mal adaptés à un environnement marin, du fait de l'existence de bruit de fond important dû aux vagues ("clutter" der mer), sur lequel les échos de faible intensité deviennent invisibles, et d'objets fixes particuliers comme les bouées, donnant en principe des échos fixes mais qui peuvent ne pas être vus à chaque tour d'antenne en cas de forte mer, lorsque la hauteur des vagues devient supérieure à celle de la bouée.

Il est connu, par exemple par la demande de brevet fraçais publiée sous le n° A—2 356 240, d'appliquer une loi de décroissance variable, cette loi étant unique et prédéterminée.

On connaît par ailleurs, par la demande de brevet anglais publiée sous le n° A—2 015 847, un convertisseur de balayage numérique, dont la fonction de transfert, déterminant la modification apportée aux données réinscrites dans la mémoire d'image du convertisseur, est programmable; ce convertisseur comporte des moyens de sélection d'une fonction de transfert parmi plusieurs possibles qui sont susceptibles d'être variables, une telle sélection nécessitant une commande externe à l'aide d'un interrupteur.

L'objet de l'invention est un procédé de génération d'un image à rémanence artificielle permettant d'appliquer non plus une seule loi, mais une suite ordonnée et prédéterminée de lois de décroissance, dont plusieurs sont susceptibles d'être différentes les unes des autres, la succession de ces lois se faisant automatiquement et sans commande extérieure.

Plus précisément, l'invention a pour objet un procédé de génération d'une image à rémanence artificielle tel que défini par la revendication 1, et un dispositif de génération d'une image à rémanence artificielle tel que défini par la revendication 7.

D'autres avantages et particularités de l'invention apparaîtront au cours de la description qui suit, donnée à titre d'exemple non limitatif à l'aide des figures qui représentent, outre les figures 1 à 4 relatives à l'art antérieur:

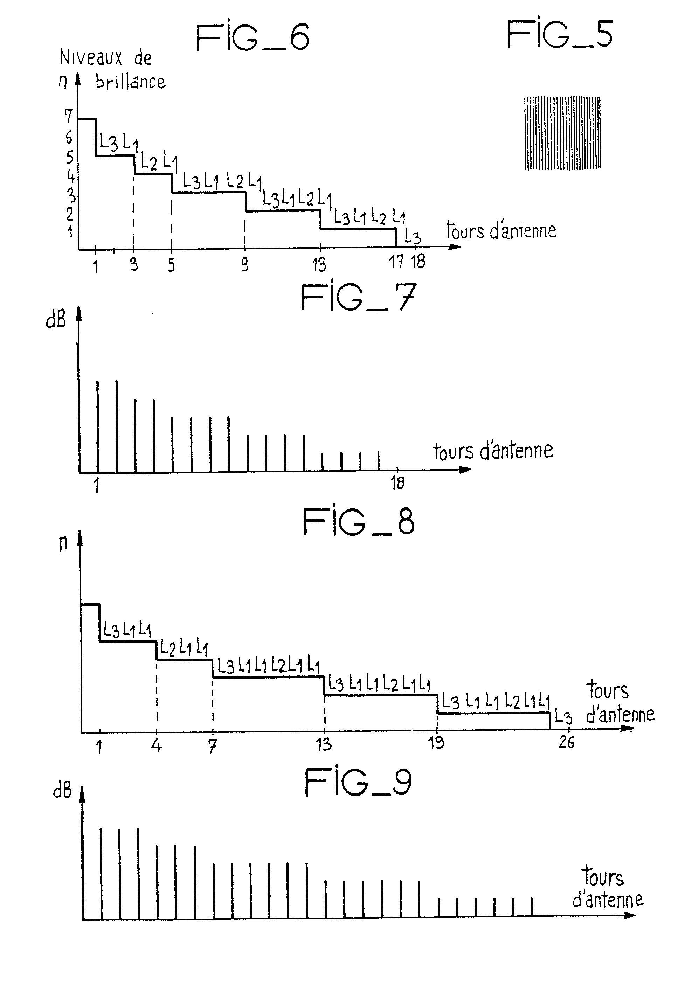

— la figure 5, un diagramme montrant sur un écran les positions successives de mobiles à vitesse de déplacement lente;

— la figure 6, un diagramme schématique montrant en fonction des tours d'antenne la décroissance de la rémanence artificielle lorsque, suivant l'invention, on applique successivement plusieurs lois de décroissance de la rémanence artificielle;

—la figure 7, un diagramme montrant l'évolution de l'amplitude des échos des mobiles de la figure 5 après application d'une loi globale de décroissance de la rémanence artificielle, suivant l'invention;

— la figure 8, un diagramme schématique montrant, en fonction du nombre de tours d'antenne, la décroissance de la rémanence artificielle, après l'application de plusieurs lois de décroissance de la rémanence artificielle dans un premier séquencement;

— la figure 9, un diagramme montrant l'évolution de l'amplitude des échos en fonction du temps, lors de l'application de la loi globale représentée figure 8;

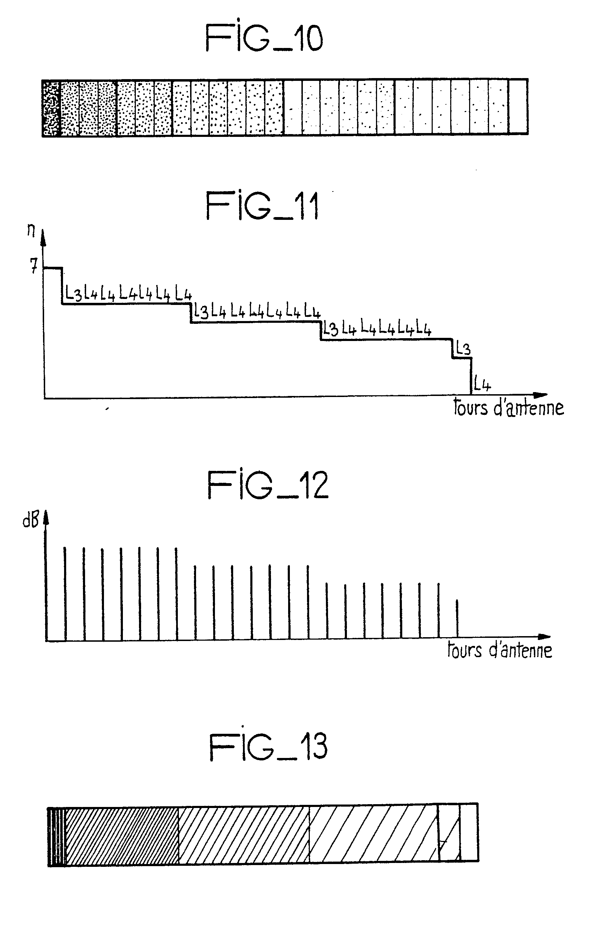

— la figure 10, un diagramme donnant, après l'application de la loi globale de la figure 8, la notion de trajectoire d'un mobile;

— la figure 11, un diagramme schématique montrant, en fonction du nombre de tours d'antenne, la décroissance de la rémanence artificielle, après l'application de plusieurs lois de décroissance de la rémanence artificielle dans un second séquencement;

— la figure 12, un diagramme montrant l'évolution de l'amplitude des échos en fonction du temps, lors de l'application de la loi globale représentée figure 11;

— la figure 13, un diagramme donnant, après l'application de la loi globale de la figure 11, la notion de trajectoire d'un mobile;

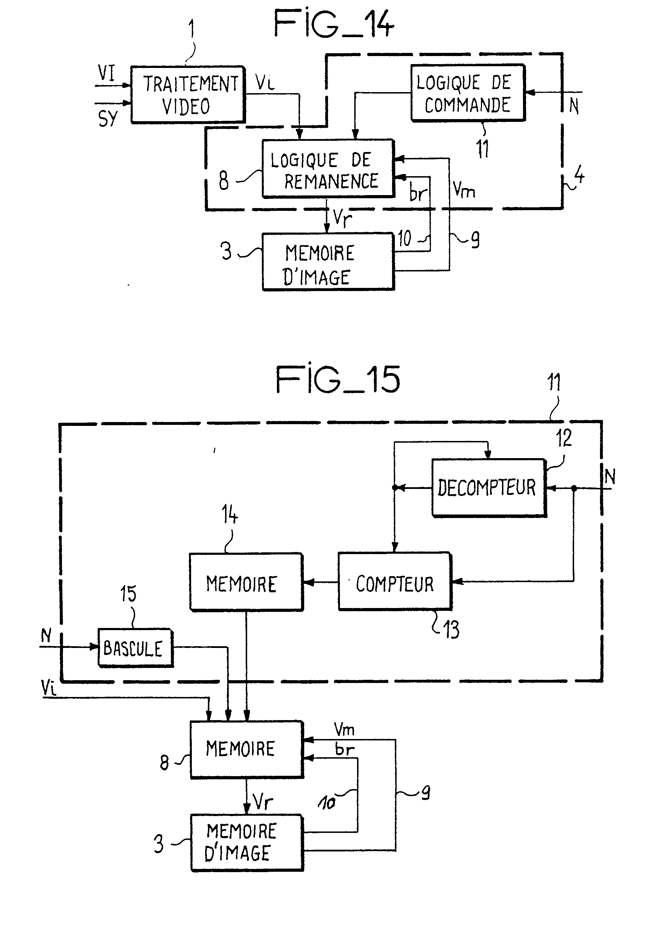

— la figure 14, un diagramme schématique des circuits déterminant, suivant l'invention, la loi de décroissance de la rémanence artificielle;

— la figure 15, un diagramme schématique de la logique de commande de la rémanence artificielle.

Sur ces différentes figures, les mêmes références se rapportent aux mêmes éléments.

Ainsi que cela a été mentionné ci-dessus, l'invention se propose de créer, dans un transformateur numérique d'images, une loi de décroissance de la rémanence artificielle qui soit fonction de l'environnement, c'est-à-dire à la fois de l'amplitude des signaux vidéo traités et du temps, afin de favoriser certains échos par rapport à d'autres, et ce différemment par exemple à chaque tour d'antenne et sur un certain nombre de tours. L'enchaînement des lois peut être quelconque suivant ce qui est désiré; toutefois il doit être cyclique.

Sur la figure 5, on a représenté par des lignes parallèles des échos successivement fournis par un même, se déplacant à vitesse lente.

Selon l'art antérieur, selon ce qui a été dit ci-dessus, ces échos successsifs ont tendance à former une masse lumineuse indistincte.

Sur la figure 5, l'échelle n'est pas respectée, dans la pratique on ne voit pas les raies qui sont présentées.

Dans la situation opérationnelle définie, il est intéressant de détacher le dernier écho incrit des précédents; pour ce faire, il est nécessaire de décrémenter rapidement les niveaux de brillance élevés du signal vidéo; le niveau du dernier écho n'ayant pas encore été décrémenté, celui-ci se détachera de l'ensemble.

Désirant ensuite obtenir sur l'image les différentes phases du déplacement des mobiles, c'est-à-dire restituer la notion de trajectoire, il faut maintenir plus longtemps en mémoire les informations vidéo des niveaux intermédiaires.

Par ailleurs, pour éviter le plus possible les inconvénients occasionnés par le bruit, c'est-à-dire améliorer la détection, il faut réduire le plus possible les bas niveaux en appliquant une loi de décroissance rapide.

Dans ce qui suit on donne un exemple de combinaison de lois de décroissance en fonction de l'amplitude des signaux vidéo concernés et du temps, qui permet de résoudre le problème qui a été posé, par exemple pour des mobiles à déplacement lent. On suppose que la vidéo est codée sur 3 bits fournissant de la sorte 8 niveaux de luminosité. Dans ce qui suit, quatre lois sont décrites.

Une première loi appelée L1 est telle qu'elle ramène les niveaux élevés, ici les niveaux 6 et 7 part exemple, au niveau 5 et maintient constantes les luminosités des informations qui sont à des niveaux inférieurs ou égaux à 5.

Par ailleurs, contrairement à ce qui a été décrit ci-dessus pour l'art antérieur dans lequel le signal vidéo ($V_i$) est directement inscrit s'il présente une luminosité supérieure à celle du signal vidéo $V_m$ déjà enregistré dans la mémoire, on procède selon l'invention à une inscription dite pondéré.

Cette pondération consiste à procéder de la façon suivante:

— si $V_i \geq V_m$ et $V_i \geq$ niveau 3, $V_r = V_i$
— si $V_i \geq V_m$ et $V_i <$ niveau 3,

$$V_r = \frac{V_i + V_m}{2}$$

Cette inscription pondérée a pour effet de permettre l'intégration tour d'antenne par tour d'antenne de la luminosité d'un écho d'intensité lumineuse inférieure au niveau 3, dont la position ne varie pas d'un tour d'antenne au suivant; au bout d'un certain nombre de tours d'antenne, la luminosité de cet écho a crû suffisamment pour qu'il devienne visible. Dans des conditions analogues, un écho de bruit d'un niveau lumineux comparable, mais qui est aléatoire, c'est-à-dire qu'il se retrouve pas dans une même position d'un tour d'antenne au suivant, ne peut être intégré et finit par disparaître. Dans ces conditions donc, un écho moyen devient visible et un écho de bruit est supprimé.

Une seconde loi appelée (L2) est telle qu'elle ramène les niveaux élevés 6 et 7, au niveau 5, qu'elle décrémente le niveau 5 et qu'elle maintient constants les niveaux inférieurs au niveau 5. De plus l'inscription du signal vidéo incident $V_i$ est pondérée comme pour la loi L1.

Une troisième loi (L3) est telle qu'elle ramène les niveaux élevés au niveau 5, qu'elle décrémente d'un seul niveau k=1 tous les niveaux inférieurs ou égaux au niveau 5. L'inscription du signal vidéo incident est pondérée comme précédemment.

Un quatrième loi (L4) est telle qu'elle ramène les niveaux élevés 6 et 7 au niveau 5, et qu'elle décrémente avec un facteur k=2, les niveaux inférieurs ou égaux au niveau 3.

D'autres lois peuvent être définies pour être appliquées suivant la situation opérationnelle constatée et ce que l'on désire obtenir.

Suivant un mode de réalisation de l'invention, ces lois L1, L2, L3 et L4 peuvent être appliquées successivement au fil des périodes de renouvellement de l'image incidente, c'est-à-dire des tours d'antenne dans le cas d'un radar, avec un séquencement déterminé, permettant d'accentuer un effet plutôt qu'un autre. On notera que le séquencement n'exclut pas la répétition d'une ou de plusieurs de ces lois. Ce séquencement forme une loi globale de rémanence qui est donc variable dans le temps.

La figure 6 illustre la décroissance de la luminosité d'un point, initialement au niveau de brillance maximum (niveau 7), au fil des tours d'antenne par application d'une combinaison particulière des quatre lois précédentes, à savoir $L_3$, $L_1$, $L_2$, $L_1$.

Au premier tour d'antenne, le point considéré est donc au niveau 7. Au deuxième tour d'antenne, par application de la loi $L_3$, son niveau tombe à 5. Au tour d'antenne suivant, son niveau est maintenu à 5 par application de la loi $L_1$. Au tour suivant, la loi $L_2$ provoque la chute de son niveau à 4, etc... jusqu'à ce que le point disparaisse au 18e tour d'antenne.

Ce diagramme de la figure 6 est bien entendu tracé en l'absence de signal vidéo incident ($V_i$) pour le point considéré.

La figure 7 montre une évolution au fil des tours d'antenne analogue à celle de la figure 6, dans les mêmes conditions, mais où l'amplitude des échos (en dB) remplace les niveaux be brillance.

On remarque que toutes les lois considérées concourrent à ramener les niveaux supérieurs au niveau 5; ceci a pour effet de détacher de l'image lumineuse le dernier écho reçu, qui devient ainsi parfaitement visible par rapport aux échos précédentes dont le niveau lumineux est plus faible. La loi $L_2$ dose la décroissance du niveau intermédiaire 5 et la loi $L_1$ assure le maintien de toutes les informations vidéo dont l'intensité est inférieure ou égale au niveau 5.

La figure 8 présente, de façon analogue à ce qui est fait figure 6, la loi globale obtenue avec un séquencement $L_3$-$L_1$-$L_1$$L_2$-$L_1$-$L_1$.

On constate un étalement des informations de niveau moyen, par exemple les niveaux 3, 2 et 1, qui donnent à un observateur une meillure notion de la direction et du sens de déplacement d'un mobile.

La figure 9 montre l'évolution de l'amplitude des échos quand on applique la loi de la figure 8, de façon analogue à la figure 7.

La figure 10 représente cette notion de déplacement par un dégradé de la luminosité, qui décroit de la gauche vers la droite. Pendant les trois premiers tours d'antenne, l'image est très lumineuse; elle décroit pendant les 3 tours suivants, décroit encore pendant les 6 tours suivants et ainsi de suite. Cette décroissance de la luminosité est suggerée par des points de plus en plus espacées.

La figure 11, représente un autre exemple de loi globale obtenue avec un séquencement

L3-L4-L4-L4-L4-L4-L4.

On constate dans ce cas un étalement de la comète pour les niveaux intermédiaires 5, 4 et 3 et une extinction relativement rapide des informations de niveaux 2 et 1.

La figure 12 représente l'évolution de l'amplitude des échos lorsque l'on applique la loi de décroissance précédente.

La figure 13 est une représentation symbolique analogue à celle de la figure 10, mais pour la loi de la figure 11 et où les points ont été remplacés par des raies.

On peut résumer dans ce qui suit la loi de rémanence résultant de la combinasion des lois L1, L2, L3, mais en faisant abstraction du temps:

— pour $Vm \geqslant 5$    si $Vi \geqslant 5$     $Vr = Vi$
               si $Vi < 5$      $Vr = 5$
— pour $3 \leqslant Vm < 5$   si $Vi \geqslant Vm$   $Vr = Vi$
               si $Vi < Vm$    $Vr = Vm$
— pour $0 \leqslant Vm < 3$   si $Vi \geqslant 3$     $Vr = Vi$

$$\text{si } Vm < Vi < 3 \quad Vr = \frac{V_i + V_m}{2}$$

La figure 14 représente un schéma partiel d'un mode de réalisation d'un TDI selon l'invention.

Le circuit 1 de traitement de la vidéo radar VI délivre la vidéo incidente $V_i$ à un circuit 8 dit logique de rémanence, qui détermine la vidéo résultante $V_r$ à inscrire dans la mémoire d'image 3. Suivant la loi de rémanence choisie tel que cela a été expliqué précédemment, le circuit 8 effectue la comparaison entre la vidéo incidente $V_i$, délivrée par le circuit 1, et la vidéo $V_m$ existant en mémoire que cette dernière lui transmet par une liaison 9. Par une liaison 10, la mémoire 3 transmet à la logique de rémanence 8, le bit de rémanence $b_r$ qui doit empêcher qu'une réinsertion d'un signal vidéo déjà mémorisé et décrémenté ne soit faite plusieurs fois par tour d'antenne. Un circuit logique dit de commande 11, contrôlé par un signal de référence angulaire, le signal nord (N) dans le cas d'un radar, est connecté à logique de rémanence 8, et commande les changements de lois de rémanence à chaque tour d'antenne, c'est-à-dire à chaque période de renouvellement de l'image incidente, c'est-à-dire en fonction du temps. Les circuits 8 et 11 forment le circuit de rémanence 4 de la figure 1.

La figure 15 représente le schéma d'un mode de réalisation du circuit 11.

La logique de commande 11 comporte: un circuit décompteur 12, commandé par le signal nord N; un compteur d'adressage 13, commandé également par le signal N; une mémoire 14, contenant la suite des lois de décrémentation qui se succedent suivant l'invention à chaque cycle d'opération. La logique de rémanence 8 précédente peut être réalisée par une mémoire, qui peut être une mémoire programmable (PROM) ou à accès aléatoire (RAM), qui contient la loi de composition globale de la décroissance de la rémanence. Elle est connectée à la mémoire 14. Elle reçoit l'information vidéo incidente $(V_i)$, le bit de tour d'une bascule 15, déclenchée par le signal Nord (N) dans le cas d'un radar, l'information $V_m$ ainsi que le bit de rémanence $(b_r)$ contenus dans la mémoire d'image 3.

Le fonctionnement de la logique de commande 11 est le suivant.

Au début d'un cycle, c'est-à-dire d'une suite de lois de rémanence (par exemple quatre sur la figure 6 ou six sur la figure 8) qui vont se succéder et se répéterons au cours des cycles suivants, le décompteur 12 affiche le nombre de lois du cycle, L'impulsion de fin de décomptage est envoyée d'une part au compteur d'adressage 13 et d'autre part au décompteur 12 lui-même, afin de le recharger pour lui permettre de piloter un nouveau cycle.

Le compteur 13 est déclenché par le signal N et l'information qu'il délivre est fournie à la mémoire 14. Cette information constitue une adresse d'une zone de la mémoire 14 où est stockée la référence (numéro par exemple) de la loi à appliquer à chaque tour d'antenne.

L'impulsion de fin de décomptage du décompteur 12 remet le compteur 13 à zéro.

La mémoire 14 fournit donc au circuit de rémanence 8 l'indication de la loi à appliquer. Celui-ci fournit, sur réception en outre des informations $V_i$, $V_m$ et $b_r$, l'information $V_r$.

Dans ce qui précède on a donné quelques exemples de lois qui peuvent être appliquées dans une situation opérationnelle donnée. D'autres exemples de lois peuvent être stockés dans l'équipement, à la disposition d'un opérateur ou fonction de commandes opérateur, qui permettent de modifier le séquencement des lois à appliquer suivant la situation opérationnelle.

On pourra noter également que le facteur de décrémentation $k$ est variable et selon l'invention, pour chaque loi appliquée, sa valeur peut être choisie suivant l'effet que l'on veut privilégier. On peut signaler la possibilité de choisir k=0 dans une situation opérationnelle particulière. Ce peut par exemple être le cas d'un écho dont on ne veut pas perdre la trace et que l'on veut enregistrer de façon continue dans la mémoiré image. Dans ce cas choisir k=0 revient à supprimer la décroissance de la rémanence par une certaine catégorie d'échos de niveau déterminé et de ce fait d'un tour d'antenne au suivant, l'écho enregistré ne voit pas sa luminosité décroitre.

On a ainsi décrit un procédé de traitement de la rémanence artificielle dans un transformateur numérique d'images ainsi qu'une réalisation donnée à titre d'exemple non limitatif. Dans la pratique, la réalisation peut être faite à l'aide de microprocesseur.

**Revendications**

1. Procédé de génération d'une image à rémanence artificielle à partir d'un signal vidéo ayant une période de renouvellement donnée, ce procédé comportant les étapes suivantes:
— une étape d'échantillonnage et de mise sous forme numérique du signal vidéo, la valeur numérique résultante étant dite valeur incidente $(V_i)$;
— une étape de comparaison de la valeur incidente $(V_i)$ avec une valeur dite valeur mémorisée

($V_m$), lue dans une mémoire numérique, dont les adresses de stockage sont associées aux valeurs incidentes obtenues à des instants successifs dans chaque période de renouvellement;

— une étape d'inscription, d'une valeur dite valeur résultante ($V_r$), à l'adresse associée à la valeur incidente comparée, cette valeur résultante ($V_r$) découlant du résultat de la comparaison préalable et de l'application à la valeur mémorisée ($V_m$) d'une loi prédéfinie de rémanence, réglant la décroissance des valeurs mémorisées dans chaque période de renouvellement;

— une étape de lecture et d'affichage des valeurs stockées dans la mémoire numérique, le rythme de cette lecture étant distinct du temps de renouvellement du signal vidéo, le procédé étant caractérisé per le fait que la loi de rémanence appliquée à chaque période de renouvellement est prise d'un séquencement prédéterminé de lois prédéfinies dont plusieurs sont différentes les unes des autres lesquelles lois sont appliquées successivement selon l'ordre donné par le séquencement pendant un nombre de périodes constituant un cycle et correspondant au nombre des lois du séquencement.

2. Procédé suivant la revendication 1, caractérisé par le fait, que chaque loi de rémanence fait intervenir un facteur de décrémentation caractéristique de cette loi, représentant la décroissance quantifiée du signal résultant ($V_r$) par rapport au signal mémorisé ($V_m$), lorsque le signal incident ($V_i$) est inférieur au signal mémorisé ($V_m$), ce facteur de décrémentation étant fonction du signal incident ($V_i$).

3. Procédé suivant l'une des revendications précédentes caractérisé par le fait qu'au moins une loi de rémanence du séquencement assure une décrémentation suffisamment rapide des signaux vidéo élevés pour que l'image lumineuse du dernier écho reçu soit détachée.

4. Procédé suivant l'une des revendications précédentes, caractérisé par le fait qu'au moins une loi de rémanence du séquencement assure le maintien en mémoire des signaux vidéo des niveaux de luminosité intermédiaire.

5. Procédé suivant l'une des revendications précédentes, caractérisé par le fait qu'au moins une loi de rémanence du séquencement assure la décroissance suffisamment rapide des signaux vidéo de faible luminosité afin que ceux-ci soient éteints.

6. Procédé suivant l'une des revendications précédentes, caractérisé par le fait qu'au moins une loi de rémanence du séquencement comporte pour les signaux vidéo de luminosité faible, une inscription dite pondérée du signal vidéo incident, consistant à réaliser, pour former un signal résultant, la moyenne arithemétique du signal vidéc incident ($V_i$) et du signal mémorisé ($V_m$) lorsque le premier est supérieur au deuxième mais inférieur à un niveau prédéterminé.

7. Dispositif de génération d'une image à rémanence artificielle permettant de mettre en oeuvre le procédé selon l'une des revendications précédentes, comportant:

— un circuit (1) de traitement d'un signal vidéo ayant une période de renouvellement donnée, ledit circuit comportant des moyens d'échantillonnage et de mise sous forme numérique du signal vidéo;

— une mémoire d'image (3) numérique dont les adresses de stockage sont associées aux valeurs numérisées du signal vidéo obtenues à des instants successifs dans chaque période de renouvellement;

— un circuit de rémanence (4) destiné à comparer chaque valeur numérisée avec la valeur mémorisée à l'adresse correspondante de la mémoire d'image et à inscrire, dans ladite adresse, une valeur résultante découlant du résultat de la comparaison préalable et de l'application à la valeur mémorisée d'une loi prédéfinie de rémanence réglant la décroissance des valeurs mémorisées dans chaque période de renouvellement;

— un circuit d'affichage des valeurs stockées dans la mémoire d'image, comportant des moyens de lecture des valeurs stockées à un rythme distinct de la période de renouvellement du signal vidéo,

le dispositif étant caractérisé en ce que le circuit de rémanence comporte:

(i) des moyens logiques (8) assurant l'application d'un séquencement prédéterminé de lois de rémanence prédéfinies dont plusieurs sont différentes les unes des autres;

(ii) des moyens de commande (11) pilotant l'application successive des lois de rémanence dudit séquencement dans le rythme des périodes de renouvellement pendant un cycle de périodes égales en nombre au nombre des lois du séquencement choisi.

8. Dispositif suivant la revendication 7, caractérisé par le fait que les moyens logiques comporte une mémoire numérique (8) reçevant: le signal vidéo incident ($V_i$); un bit de tour, caractéristique de la période de renouvellement, le signal mémorisé ($V_m$), un bit de rémanence indiquant si l'étape de réinscription a été réalisée dans la période de renouvellement considérée, et l'indication des lois de rémanence, ladite mémoire (8) délivrant à la mémoire d'images (3), le signal résultant ($V_r$).

9. Dispositif suivant la revendication 7, caractérisé par le fait que les moyens logiques de commande (11) comportent: un décompteur (12), contenant initialement le nombre des lois de rémanence du séquencement; un compteur d'adressage (13), commandé par le décompteur (12), une mémoire (14) commandée par le compteur d'adressage (13), cette mémoire contenant la suite des lois se succédant à chaque cycle et délivrant aux moyens logiques (8) l'indication des lois de rémanence à appliquer.

**Patentansprüche**

1. Verfahren zum Erzeugen eines Bildes mit künstlicher Remanenz aus einem Videosignal von gegebener Erneuerungsperiode, wobei dieses Verfahren die folgenden Schritte umfaßt:

— einen Schritt, bei dem das Videosignal abgetastet und digitalisiert wird, wobei der resultierende Digitalwert als Ankunftswert ($V_i$) bezeichnet wird;

— einen Schritt, bei dem der Ankunftswert ($V_i$) mit einem als gespeichert bezeichneten Wert ($V_m$) verglichen wird, der in einem Digitalspeicher ausgelesen wird, dessen Speicheradressen den Ankunftswerten zugeordnet sind, welche in jeder Erneuerungsperiode zu aufeinanderfolgenden Zeitpunkten erhalten werden;

— einen Schritt, bei dem ein sogenannter resultierender Wert ($V_r$) an der Adresse eingeschrieben wird, welche dem verglichenen Ankuftswert zugeordnet ist, wobei dieser resultierende Wert ($V_r$) sich aus dem Ergebnis des vorausgehenden Vergleichens sowie aus der Anwendung eines vorbestimmten Remanenzgesetzes, das die Abnahme der gespeicherten Werte in jeder Erneuerungsperiode festlegt auf den gespeicherten Wert ($V_m$) ergibt;

— einen Schritt, bei dem die in dem Digitalspeicher gespeicherten Werte ausgelesen und angezeigt werden, wobei der Rhythmus dieses Auslesens von der Erneuerungszeit des Videosignals verschieden und das Verfahren dadurch gekennzeichnet ist, daß das aufjede Erneuerungsperiode angewandte Remanenzgesetz aus einer vorbestimmten Ablauffolge vorbestimmter Gesetze entnommen wird, wovon mehrere sich von den anderen unterscheiden, wobei diese Gesetze nacheinander gemäß der von der Ablauffolge gegebenen Ordnung während einer Anzahl von Perioden angewandt werden, die einen Zyklus bilden und der Anzahl der Gesetze der Ablauffolge entsprechen.

2. Verfahren nach Anspruch 1, dadurch gekennzeichnet, daß jedes Remananzgesetz einen Dekrementierungsfaktor ins Spiel bringt, der für dieses Gesetz charakteristisch ist und die quantisierte Abnahme des resultierenden Signals ($V_r$) im Verhältnis zu dem gespeicherten Signal ($V_m$) darstellt, wenn das Ankunftssignal ($V_i$) kleiner als das gespeicherte Signal ($V_m$) ist, wobei dieser Dekrementierungsfaktor von dem Ankunftssignal ($V_i$) abhängig ist.

3. Verfahren nach einem der vorstehenden Ansprüche, dadurch gekennzeichnet, daß wenigstens ein Remanenzgesetz der Ablauffolge eine ausreichend schnelle Dekrementierung der hohen Videosignale gewährleistet, damit das Lichtbild des letzten empfangenen Echos sich abhebt.

4. Verfahren nach einem der vorstehenden Ansprüche, dadurch gekennzeichnet, daß wenigstens ein Remanenzgesetz der Ablauffolge die Aufrechthaltung der Videosignale mit Luminanz-Zwischenpegel in dem Speicher gewährleistet.

5. Verfahren nach einem der vorstehenden Ansprüche, dadurch gekennzeichnet, daß wenigstens ein Remanenzgesetz der Ablauffolge die ausreichend schnelle Abnahme der Videosignale mit schwacher Luminanz gewährleistet, damit diese gelöscht werden.

6. Verfahren nach einem der vorstehenden Ansprüche, dadurch gekennzeichnet, daß wenigstens ein Remanenzgesetz der Ablauffolge für die Videosignale mit schwacher Luminanz ein sogenanntes gewichtetes Einschreiben des Ankunftsvideosignals umfaßt, das darin besteht, um ein resultierendes Signal zu bilden, das arithmetische Mittel zwischen dem Ankunftsvideosignal ($V_i$) und dem gespeicherten Signal ($V_m$) zu bilden, wenn das erste größer als das zweite, aber kleiner als ein vorbestimmtes Niveau ist.

7. Vorrichtung zum Erzeugen eines Bildes mit künstlicher Remanenz, die es ermöglicht, das Verfahren nach einem der vorstehenden Ansprüche anzuwenden, mit:

— einer Schaltung (1) zur Verarbeitung eines Videosignals mit einer vorgegebenen Erneuerungsperiode, wobei die genannte Schaltung Mittel zum Abtasten und zur Digitalisierung des Videosignals umfaßt;

— einem Digitalbildspeicher (3), dessen Speicheradressen den digitalisierten Werten des Videosignals zugeordnet sind, die zu aufeinanderfolgenden Zeitpunkten in jeder Erneuerungsperiode erhalten werden;

— einer Remanenzschaltung (4), die dazu bestimmt ist, jeden digitalisierten Wert mit dem an der entsprechenden Adresse des Bildspeichers gespeicherten Wert zu vergleichen sowie einen resultierenden Wert an der genannten Adresse einzuschreiben, der sich aus dem Ergebnis des vorausgehenden Vergleichens und der Anwendung eines vorbestimmten Remanenzgesetzes auf den gespeicherten Wert ergibt, das die Abnahme der in jeder Erneuerungsperiode gespeicherten Werte festlegt;

— einer Schaltung zur Anzeige der in dem Bildspeicher gespeicherten Werte, die Mittel zum Auslesen der gespeicherten Werte in einem von der Erneuerungsperiode des Videosignals verschiedenen Rhythmus umfaßt,

wobei die Vorrichtung dadurch gekennzeichnet ist, daß die Remanenzschaltung umfaßt:

(i) Logikmittel (8), die die Anwendung einer vorbestimmten Ablauffolge von vorbestimmten Remanenzgesetzen gewährleisten, wovon mehrere sich von den anderen unterscheiden;

(ii) Steuermittel (11), die die aufeinanderfolgende Anwendung der Remanenzgesetze der genannten Ablauffolge im Rhythmus der Erneuerungsperioden während eines Zyklus von Perioden steuern, deren Anzahl gleich der Anzahl der Gesetze der gewählten Ablauffolge ist.

8. Vorrichtung nach Anspruch 7, dadurch gekennzeichnet, daß die Logikmittel einen Digitalspeicher (8) umfassen, der empfängt: das Ankunftsvideosignal ($V_i$); ein Ordnungsbit, das für die Erneuerungsperiode charakteristisch ist, das gespeicherte Siganl ($V_m$), ein Remanenzbit, das anzeigt, ob der Neueinschreibungsschritt in der betrachteten Erneuerungsperiode durchgeführt worden ist, sowie die Abgabe der Remanenzgesetze, wobei der genannte Speicher (8) das resultierende Signal ($V_r$) an den Bilderspeicher (3) abgibt.

9. Vorrichtung nach Anspruch 7, dadurch gekennzeichnet, daß die Logiksteuermittel (11) umfassen: einen Abwärtszähler (12), der anfangs die Anzahl der Remanenzgesetze der Ablauffolge enthält; einen Adressierzähler (13), der durch den Abwärtszähler (12) gesteuert wird, einen Speicher (14), der durch den Adressierzähler (13) gesteuert wird, wobei dieser Speicher die Folge der Gesetze enthält, die bei jedem Zyklus aufeinanderfolgen, und an die Logikmittel (8) die anzuwendenden Remanenzgesetze abgibt.

**Claims**

1. A method for the generation of an image with artificial remanence starting from a video signal having a given renewal period, said method comprising the following steps:
— a sampling and digitalizing stage for the video signal to yield a digital value referred to as the incident value $(V_i)$;
— a comparison stage for comparing the incident value $(V_i)$ with a value referred to as the stored value $(V_m)$, read from a digital memory, whose storage addresses are associated with the incident values obtained at successive instants in each renewal period;
— a write stage, of a value termed the resultant value $(V_r)$, at the address associated with the compared incident value, said resultant value $(V_r)$ being derived from the result of the previous comparison and the application to the stored value $(V_m)$ of a predefined remanence function regulating the decrease in the values stored in each renewal period;
— a read and display stage for the values stored in the digital memory, the rhythm of this reading action being distinct from the renewal time of the video signal, said method being characterized in that the remanence function applied at each renewal period is abstracted from a predetermined sequencing of predefined functions of which a number are different to others, which functions are successively applied in accordance with the order determined by the sequencing during a number of periods constituting a cycle and corresponding to the number of sequencing functions.

2. The method as claimed in claim 1 characterized in that each remanence function causes the intervention of a decrement factor characteristic of the said function, representing the quantified decrease of the resulting signal $(V_r)$ in relation to the stored signal $(V_m)$, when the incident signal $(V_i)$ is less than the stored signal $(V_m)$, said decrement factor being a function of the incident signal $(V_i)$.

3. The method as claimed in any one of the preceding claims, characterized in that at least one remanence sequencing function ensures a sufficiently rapid decrement of the enhanced video signals to cause detachment of the luminous image of the last received echo.

4. The method as claimed in any one preceding claim, characterized in that at least one remanence sequencing function ensures intermediate brilliance levels in the video signal memory.

5. The method as claimed in any one preceding claim, characterized in that at least one remanence sequencing function ensures a sufficiently rapid decrement of the low brilliance video signals for them to be extinguished.

6. The method as claimed in any one of the preceding claims, characterized in that at least one remanence sequencing function comprises, for the video signals with a low brilliance, a weighted write of the said incident video signal, consisting of effecting, for forming a resultant signal, the arithmetic mean of the incident video signal $(V_i)$ and of the stored signal $(V_m)$ when the former is greater than the latter by less than a predetermined level.

7. A device for the generation of an artificial remanence image making it possible to perform the method as claimed in any one of the preceding claims, comprising:
— a circuit (1) for the treatment of a video signal having a given renewal period, said circuit comprising sampling and digitalizing means for the video signal;
— a digital image memory (3) whose storing addresses are associated with digitalized values of the video signal obtained at successive instants in each renewal period;
— a remanence circuit (4) for comparing each digitalized value with the value stored at the corresponding address of the image memory and for writing, at the said address, a value resulting from the previous comparison and the application to the stored value of a predefined remanence function controlling the decrease in the stored values in each renewal period;
— a display circuit for the values stored in the image memory, comprising means for reading the stored values with a rhythm distinct from the renewal period of the video signal, said device being characterized in that the said remanence circuit comprises:
(i) logic means (8) ensuring the application of a predetermined sequencing of the predefined remanence functions of which several are different to each other, and;
(ii) control means (11) for the successive application of the remanence functions of the said sequencing in the same rhythm as that of the renewal periods during a cycle of periods equal in its number to the number of the sequencing functions selected.

8. The device as claimed in claim 7, characterized in that the logic means comprise a digital memory (8) receiving the following: the incident video signal $(V_i)$; one turn bit, characteristic of the renewal period, the stored signal $(V_m)$, a remanence bit indicating if the re-write stage has been performed in the period of renewal in question, and the indication of the remanence functions, the said memory (8) supplying the resultant signal $(V_r)$ to the image memory (3).

9. The device as claimed in claim 7, characterized in that the logic control means (11) comprise the following: a downwards counter (12) initially containing the number of the remanence functions of the sequencing; an address counter (13), controlled by the downwards counter (12), a memory (14) controlled by the address counter (13), said memory containing the sequence of functions following each cycle and supplying an indication of the remanence functions to be applied, to the logic means (8).

FIG_1

FIG_2

Niveaux de brillance

FIG_3    FIG_4

Niveaux de brillance

FIG_6

FIG_5

FIG_7

FIG_8

FIG_9

# FIG_10

# FIG_11

$\eta$

7

L3 L4 L4 L4 L4 L4 L4

L3 L4 L4 L4 L4 L4 L4

L3 L4 L4 L4 L4 L4

L3

L4

fours d'antenne

# FIG_12

dB

fours d'antenne

# FIG_13

## FIG_14

## FIG_15